# EUROPÄISCHE PATENTSCHRIFT

(11) **EP 2 628 216 B1**
(45) Veröffentlichungstag und Bekanntmachung des Hinweises auf die Patenterteilung: **20.08.2014**
(21) Anmeldenummer: 11779087.3
(22) Anmeldetag: 10.10.2011
(51) Int. Cl.: H01R 39/24, H01R 39/20, H02K 5/14

(54) **EDELMETALLHALTIGES KONTAKTSTÜCK AUF EINEM FEDERTRÄGER MIT ROTATIONSSYMMETRISCHEM BIEGEMOMENT**
CONTACT PIECE CONTAINING PRECIOUS METAL ON A SPRING SUPPORT HAVING A ROTATIONALLY SYMMETRICAL BENDING MOMENT
ÉLÉMENT DE CONTACT CONTENANT UN MÉTAL NOBLE SUR UN SUPPORT ÉLASTIQUE À MOMENT DE FLEXION SYMÉTRIQUE EN ROTATION

(30) Priorität: 13.10.2010 DE 102010048189
(43) Veröffentlichungstag der Anmeldung: 21.08.2013
(60) Teilanmeldung: 14164404.7
(73) Patentinhaber: Heraeus Materials Technology GmbH & Co. KG, 63450 Hanau (DE)
(72) Erfinder: GEHLERT, Bernd, 63486 Bruchköbel (DE); PAULSEN, Rolf, 63452 Hanau (DE); PRUNZEL, Ingo, 63486 Bruchköbel (DE); WEILAND, Reinhold, 63454 Hanau (DE); BAAKE, Patrick, 63456 Hanau (DE)
(74) Vertreter: Kleinevoß, Ulf
(86) Internationale Anmeldenummer: PCT/EP2011/005049
(87) Internationale Veröffentlichungsnummer: WO 2012/048839

(56) Entgegenhaltungen:
- US-A- 3 543 068
- US-A- 3 671 791
- US-A1- 2005 282 446

## Beschreibung

Die Erfindung betrifft einen Federkontakt für einen Schleifkontakt mit einem Anschlussbereich und zumindest einem Kontaktbereich umfassend ein gestrecktes Federelement und ein Edelmetall.

Die Erfindung betrifft auch einen Schleifringübertrager umfassend einen solchen Federkontakt sowie einen Motor und einen Dynamo mit einem solchen Schleifringübertrager.

Federkontakte für Schleifkontakte sind aus dem Stand der Technik gut bekannt. Schleifkontakte dienen dazu, Strom von einem ruhenden Teil einer Apparatur auf einen sich bewegenden zweiten Teil der Apparatur zu übertragen. Schleifkontakte oder Gleitkontakte kommen insbesondere bei Motoren und Dynamos zum Einsatz, bei denen Strom auf sich drehende Teile übertragen wird. Dabei werden so genannte Schleifringübertrager gebildet, bei denen der Federkontakt auf einem Schleifring schleift und so eine leitende Verbindung vom Federkontakt zum Schleifring aufgebaut wird.

Der Kontaktbereich stellt eine elektrische Zuleitung oder Ableitung zum eigentlichen Schleifkontakt oder Gleitkontakt dar, über den ein Motor betrieben wird oder über den ein von einem Generator erzeugter Strom abgeführt wird. Der Kontaktbereich kann dabei sowohl dem Befestigen des Federkontakts dienen als auch dem Herstellen der leitenden Verbindung zum elektrischen Anschluss. Eine solche Befestigung kann beispielsweise durch Nieten, Punkt-schweißen und/oder durch Löten erreicht werden.

Federkontakte sind meist derart aufgebaut, dass eine Blattfeder auf einen Schleifring oder einen anderen Gegenkontakt drückt und dabei einen elektrischen Kontakt herstellt. Dabei wird die Federkraft der Blattfeder ausgenutzt, um einen permanenten Druck des elektrischen Kontakts auf den Gegenkontakt zu erzeugen, der eine fortwährende leitende Verbindung sicherstellt, auch wenn sich der Gegenkontakt gegen die Blattfeder des Federkontakts bewegt. Solche gattungsgemäßen Federkontakte sind beispielsweise aus der US 2010/0096 168 A1 bekannt.

Die US 2005/282446 A1 offenbart einen Federkontakt für einen Schleifkontakt mit einem Anschlussbereich und zumindest einem Kontaktbereich umfassend ein gestrecktes Federelement und ein Edelmetall.

Die Federkontakte sind häufig aus einem Edelmetall oder einer Edelmetalllegierung gefertigt, um eine Passivierung der Oberfläche des Federkontakts, insbesondere des elektrischen Kontakts zu verhindern und so einen durchgehende leitende Verbindung sicherzustellen. Hierzu reicht es aus, wenn der Federkontakt einen Mantel aus einem Edelmetall oder einer Edelmetalllegierung hat. Verwendbare Edelmetalle oder Edelmetalllegierungen sind dadurch beschränkt, dass diese geeignete mechanische Eigenschaften haben müssen, um die Federkraft des Federkontakts nicht zu verschlechtern oder zumindest zu erhalten. Der Elastizitätsmodul und der elastische Verformungsbereich des Materials müssen an die mechanischen Anforderungen des Federkontakts angepasst sein. Daher kommen nur bestimmte Edelmetalle und Edelmetalllegierungen in Frage.

Nachteilig ist hieran des Weiteren, dass beim Einbau der Blattfeder diese positionsgenau eingesetzt werden muss, um einen ausreichend starken Kontakt sicherzustellen. Die Toleranzen beim Einbau einer solchen Blattfeder sind also eng. Zudem sind Federkontakte, die Edelmetalle beinhalten, teuer und teilweise aufwendig im Aufbau.

Die Aufgabe der Erfindung besteht also darin, einen Federkontakt, einen Schleifringübertrager, einen Motor und einen Dynamo bereitzustellen, der die Nachteile des Stands der Technik überwindet. Ein solcher Federkontakt sollte zum einen leicht einbaubar sein, beziehungsweise beim Einbau möglichst große Toleranzen aufweisen, und zum anderen möglichst kostengünstig aufgebaut sein.

Die Aufgabe der Erfindung wird durch die Merkmale des Anspruchs 1 gelöst.

Unter einem im Wesentlichen edelmetallfreien Material ist im Sinne der vorliegenden Erfindung auch ein solches Material zu verstehen, in dem noch geringe Mengen oder Spuren von Edelmetallen vorkommen. Um das Ziel zu erreichen, den Federkontakt möglichst kostengünstig aufzubauen, reicht es völlig aus einen unedlen Federdraht zu verwenden. Eine aufwendige Reinigung des Materials zum Entfernen von Edelmetallen würde diesem Zweck geradezu entgegenstehen. Unter einem Edelmetall sind im Sinne der vorliegenden Erfindung insbesondere Platin, Gold, Silber, Rhodium, Palladium und Iridium zu verstehen.

Dabei kann vorgesehen sein, dass zumindest ein Kontaktstück mit dem Federträger durch Widerstandschweißen, Laserschweißen, Punktschweißen, Kleben, Löten, Nieten und/oder Sintern verbunden ist.

Ferner kann vorgesehen sein, dass zumindest ein Kontaktstück zylindrisch, kugelig, U-förmig, profiliert mit Schweißwarzen oder halbkugelförmig ist.

Erfindungsgemäße Federkontakte können sich auch dadurch auszeichnen, dass zumindest ein Kontaktstück aus massivem Edelmetall oder einer Edelmetalllegierung besteht oder ein Manteldraht oder eine Mantelkugel mit einem edelmetallhaltigen Mantel ist.

Auch kann vorgesehen sein, dass der Federträger in der Verbindung zum Kontaktstück flach, kuhlenförmig oder profiliert ist oder der Federträger in zumindest einer Verbindung zu den Kontaktstücken flach, kuhlenförmig und/oder profiliert ist.

Eine solche Form der Verbindung kann geprägt sein. Die Prägung dabei kann auch dazu dienen das Kontaktstück oder die Kontaktstücke festzuklemmen oder einzuklemmen. Die Öffnung, die durch die Prägung gebildet wird, dient dann nicht nur der Kontaktierung sondern auch der Halterung der Kontaktstücke.

Dabei kann vorgesehen sein, dass die Prägung auf gegenüberliegend auf beiden Seiten eines im Querschnitt runden Federträgers vorgesehen ist, insbesondere umfasst der Feder-träger zwei parallele flächige Prägungen, die vorzugsweise in der Mitte des Federträgers angeordnet sind.

Flächige Prägungen dienen zum Einen dazu, dass beim Biegen des Federträgers in V-Form die Arme des Federträgers, die die Kontaktstücke halten, an einer definierten Position geknickt werden und in eine definierte Richtung geknickt werden. Bei einem Federträger mit zwei Kontaktstücken kann dadurch auch erreicht werden, dass die beiden Kontaktstücke eines geknickten Federträgers positionsgenau gegenüberliegen. Zum Anderen dienen die flachen Prägungen dazu, dass die Federträger stabil an einem flächigen Bauteil befestigbar sind. Eine flache Platine, an der ein solcher Federträger befestigt wird, kann flächig mit den flachen Prägungen verbunden werden. Zudem ist der Federträger dann weniger leicht zu verdrehen. Beim Einbau oder der Montage solcher Federträger muss auf die richtige Positionierung geachtet werden. Durch die flächige Auflage des Federträgers auf einem Substrat, einer Platine oder einem anderen Bauteil wird erfindungsgemäß auch erreicht, dass die Arme des Federträgers mit den Kontaktstücken im richtigen Winkel von dem Substrat, der Platine oder dem anderen Bauteil abstrecken.

Flächige und nichtflächige Prägungen können als Sollbiegestellen vorgesehen sein.

Dabei kann vorgesehen sein, dass im Bereich des Knicks oder der Knicke des V-förmigen Federträgers mittig zu zwei Kontaktstücken die flache Prägung und/oder zumindest die Ker-ben-förmige Prägung zum Biegen der V-Form vorgesehen ist. Hierdurch kann ein Klemmkontakt gebildet werden, bei dem ein Schleifring zwischen den beiden Armen des Federträgers angeordnet ist, die die Kontaktstücke haltern. Hierdurch wird ein stabilerer Kontakt erzeugt, das heißt, dass die Kontaktierung seltener unterbrochen wird, da der Schleifring von beiden Seiten durch die Kontaktstücke überstrichen wird.

Besonders vorteilhafte Federkontakte zeichnen sich dadurch aus, dass der Federträger 60 mm bis 250 mm, bevorzugt 100 mm bis 200 mm, besonders bevorzugt 150 mm lang ist.

Ferner kann vorgesehen sein, dass das Kontaktstück oder die Kontaktstücke 2 mm bis 15 mm, bevorzugt 5 mm bis 10 mm, besonders bevorzugt 8 mm breit und/oder lang ist oder sind.

Bei kugelförmiger Form des oder der Kontaktstücke kann vorgesehen sein, dass das kugelförmige Kontaktstück oder die kugelförmigen Kontaktstücke 0,3 mm bis 2 mm, bevorzugt 0,5 mm bis 1,5 mm, besonders bevorzugt 1 mm Durchmesser hat oder haben. Erfindungsgemäß kann auch vorgesehen sein, dass der Federträger ein im Querschnitt runder Federdraht mit zumindest bereichsweise symmetrischer Steifigkeit in der Querschnittebene ist.

Es kann auch eine Vorzugsrichtung der Federkraft des Federträgers erzeugt werden, indem auf dem Federträger eine geeignete Verformung, wie beispielsweise eine Prägung vorgesehen ist, die von der ansonsten symmetrischen Form des Federträgers abweicht.

In einer alternativen Ausgestaltung der Erfindung ist vorgesehen, dass der Federträger eine tordierte Blattfeder ist, die in der Ebene senkrecht zur Torsionsachse eine symmetrische Steifigkeit bezogen auf zumindest einen Bereich der tordierten Blattfeder hat.

Es kann vorgesehen sein, dass der Federträger eine bereichsweise symmetrische Steifigkeit in einer Ebene senkrecht zur gestreckten Ausdehnung des Federträgers aufweist.

Der Bereich der symmetrischen Steifigkeit kann einen Großteil der Länge des Federträgers *umfassen oder sogar den gesamten Federträger.*

Ferner kann vorgesehen sein, dass der Federträger und/oder das Kontaktstück oder die Kontaktstücke Drahtstücke mit bis zu 2 mm Durchmesser ist oder sind, bevorzugt 0,1 mm bis 1 mm Durchmesser, besonders bevorzugt 0,5 mm.

Erfindungsgemäße Federkontakte können sich auch dadurch auszeichnen, dass der Federträger Stahl und/oder Kupfer und/oder Beryllium umfasst, insbesondere aus Edelstahl oder Kupfer und Beryllium besteht, besonders bevorzugt aus CuBe2 besteht.

Das Material, aus dem der Federträger besteht ist also ein federelastischer Unedelmetall-Werkstoff.

Unter CuBe2 ist dabei eine federelastische Mischung aus Kupfer und Beryllium mit ungefähr 98 Gew.% Kuper und 2 Gew.% Beryllium zu verstehen. Die Mischung ist nicht einphasig legiert. Die Mischung beziehungsweise das Gefüge der verschiedenen Phasen bewirkt gute elastische Eigenschaften des Federträgers.

Zumindest ein Kontaktstück kann erfindungsgemäß ein Edelmetall umfassen, insbesondere eine intermetallischen Legierung umfassend Gold, Silber, Palladium und/oder Platin.

Auch kann erfindungsgemäß vorgesehen sein, dass zumindest ein Kontaktstück aus einer Au-Ag-Pd-Legierung besteht oder ein Manteldraht mit einem Edelmetallmantel umfassend Au, Ag und/oder Cu ist, insbesondere eine Au-Ag-Cu Legierung.

Die Erfindung betrifft auch einen Schleifringübertrager umfassend einen solchen Federkontakt, bei dem vorgesehen ist, dass das Kontaktstück oder die Kontaktstücke mit der Oberfläche leitend an zumindest einem Schleifring anliegt oder anliegen.

Die Erfindung betrifft ferner einen Elektromotor mit einem solchen Schleifringübertrager.

Schließlich betrifft die Erfindung auch einen Dynamo mit einem solchen Schleifringübertrager.

Der Erfindung liegt die überraschende Erkenntnis zugrunde, dass durch die Verwendung eines einfachen Drahts oder einer tordierten Feder eine symmetrische Steifigkeit des Federträgers erzielt wird und so eine größere Toleranz beim Einbau des Federkontakts ermöglicht wird, da sich der Federkontakt auch in den Richtungen senkrecht zu der Federkraft, die den Kontakt auf den Gegenkontakt drückt, bewegen lässt.

Zudem muss nur der elektrische Kontakt des Kontaktstücks aus einem Edelmetall oder einer Edelmetalllegierung gefertigt sein. Dies hat den Vorteil, dass durch den geringeren Einsatz von Edelmetallen Kosten gespart werden. Ein weiterer Vorteil besteht darin, dass das Edelmetall oder die Edelmetalllegierung keine besonderen elastischen Eigenschaften mehr aufweisen müssen, da der Kontaktbereich nicht die elastischen Eigenschaften des Federkontakts bestimmt sondern der Federträger. Es können also auch Edelmetalle oder Edelmetalllegierungen verwendet werden, die bisher aufgrund ihrer ungünstigen elastischen Eigenschaften nicht einsetzbar waren. Insbesondere können nun besonders verschleißbeständige Edelmetalllegierungen verwendet werden, so dass der Kontaktbereich besonders lange gut leitfähig bleibt.

Das Kontaktstück dient also ausschließlich dazu, den eigentlichen Schleifkontakt oder Gleitkontakt zu bilden. Die elastischen Eigenschaften des Federkontakts werden vollständig oder zumindest im Wesentlichen durch den Federträger bestimmt. Die beiden für den Federkontakt wesentlichen Eigenschaften, nämlich die elastischen und die kontaktherstellenden Eigenschaften, werden also durch die beiden Bauteile, nämlich den Federträger und das Kontaktstück, getrennt voneinander bestimmt und lassen sich durch den erfindungsgemäßen Aufbau getrennt voneinander einstellen.

Durch Prägungen gelingt es, auch einen im Querschnitt runden Draht leicht in V-Form zu biegen. Wenn flächige Prägungen vorgesehen sind, ist zudem der positionsgenaue Einbau beziehungsweise die Montage erfindungsgemäßer Federträger stark erleichtert. Die Vorteile, die eine Blattfeder gegenüber einer, aus einem mit einem runden Querschnitt aufgebauten Feder hat, werden also durch die flächige Auflage an der flächigen Prägung kompensiert.

Im Folgenden werden Ausführungsbeispiele der Erfindung anhand von schematisch dargestellten Figuren erläutert, ohne jedoch dabei die Erfindung zu beschränken. Dabei zeigt:
- Figur 1:: einen nicht erfindungsgemäßen Federkontakt mit zylindrischem Federträger und Kontaktstück;
- Figur 2:: einen zweiten nicht erfindungsgemäßen Federkontakt mit zylindrischem Federträger und kugelförmigem Kontaktstück;
- Figur 3:: einen erfindungsgemäßen Federkontakt mit zwei Kontaktstücken; und
- Figur 4:: einen zweiten erfindungsgemäßen Federkontakt mit zwei Kontaktstücken.

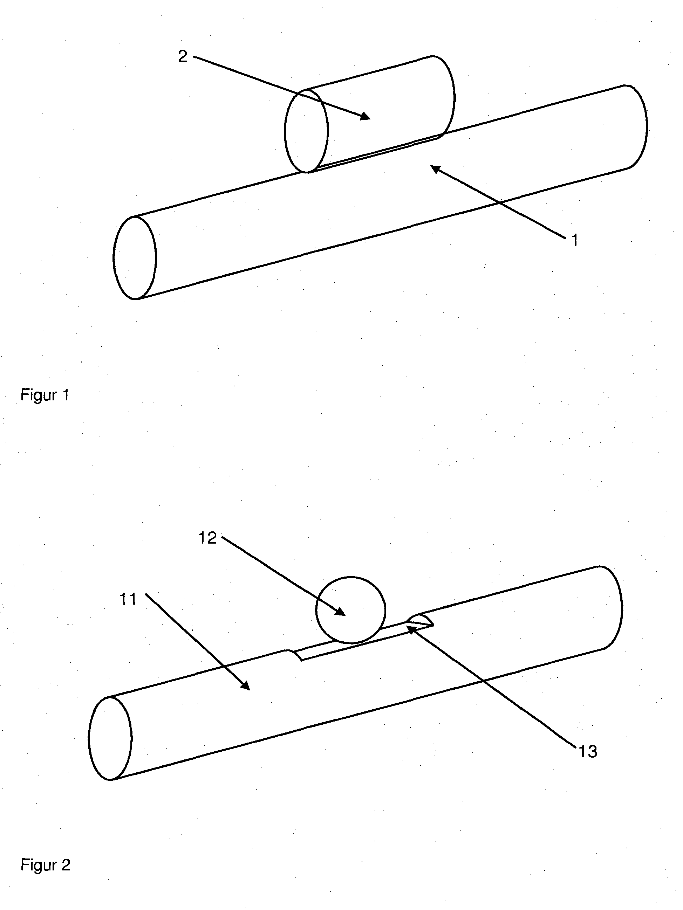

Figur 1 zeigt schematisch einen Federkontakt mit einem zylindrischen Federträger 1, der beispielsweise durch einen Draht mit kreisrundem Querschnitt gebildet ist. Auf dem Federträger 1 ist ein zylindrisches Kontaktstück 2 angeordnet, das ebenfalls ein Drahtstück sein kann. Der Federträger 1 besteht aus einem leitfähigen, elastischen Material, beispielsweise einer Legierung, wie CuBe2 oder auch Edelstahl. Das Kontaktstück 2 ist aus einem massiven Metalldraht umfassend eine Edelmetalllegierung oder ein Edelmetall aufgebaut. Ein Manteldrahtstück kann ebenso als Kontaktstück 2 verwendet werden, wobei der Mantel ein Edelmetall oder eine Edelmetalllegierung umfasst. Für die Edelmetalllegierungen des Kontaktstücks 2 sind insbesondere Goldlegierungen geeignet.

Beide Enden des Federträgers 1 eignen sich als Kontaktbereich für den Federkontakt. Der Kontaktbereich dient dazu, den Federkontakt mit einem Leiter zu verbinden, über den am Federkontakt eine Spannung anlegbar ist. Gleichzeitig kann der Federkontakt an diesem Kontaktbereich befestigt und fixiert werden.

Das Kontaktstück 2 ist über ein Lot (nicht gezeigt) mit dem Federträger 1 verbunden, das zwischen dem Kontaktstück 2 und dem Federträger 1 angeordnet ist und beide leitend miteinander verbindet.

Figur 2 zeigt schematisch einen Federkontakt mit einem zylindrischen Federträger 11 und einem kugelförmigen Kontaktstück 12. Zur besseren Aufnahme des kugelförmigen Kontaktstücks 12 ist am Federträger eine Verbindungsfläche 13 vorsehen, an der das Kontaktstück 12 über einen leitfähigen Kleber (nicht gezeigt) mit dem Federträger 11 verbunden ist. Die Verbindungsfläche 13 wird durch Prägung des zylindrischen Federträgers 11 erzeugt. Bei der Prägung kann auch eine Profilierung der Verbindungsfläche 13 erzeugt werden. Durch die Profilierung kann beispielsweise die Oberfläche an der Verbindungsfläche 13 vergrößert werden, um eine festere Verbindung mit dem Kleber zu erzeugen. Ebenso kann die Profilierung dafür sorgen, dass eine direkte Verbindung des Federträgers 11 zu dem Kontaktstück 12 erzeugt wird, indem Spitzen oder Kanten der Profilierung der Verbindungsfläche 13 in das Kontaktstück 12 hineingedrückt werden. Wird ein nicht leitfähiger Kleber verwendet, muss eine leitfähige Verbindung zwischen dem Federträger 11 und dem Kontaktstück 12 hergestellt werden. Dies kann beispielsweise mit einer leitfähigen Beschichtung oder durch eine direkte Verbindung der Verbindungsfläche 13 mit dem Kontaktstück 12 erreicht werden.

Auch eine andere Profilierung der Kontaktfläche 13 ist möglich. So kann die Form der Kontaktfläche 13 beispielsweise an die Form des Kontaktstücks 12 angepasst sein. Dies ist insbesondere dann von Vorteil, wenn die Verbindung des Kontaktstücks 12 mit dem Federträger 11 über ein Schweißverfahren hergestellt werden soll oder nur wenig Lot oder Kleber eingesetzt werden soll.

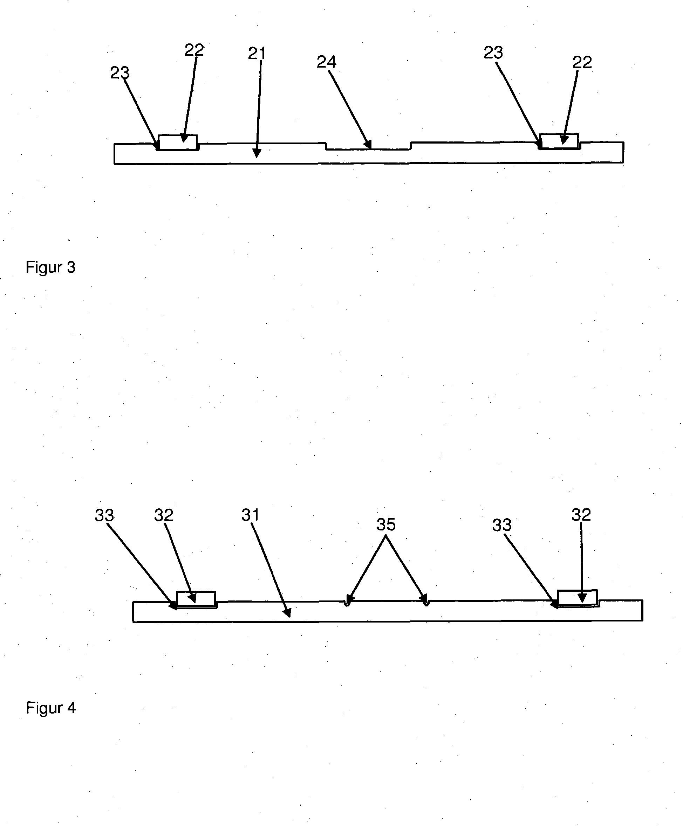

Figur 3 zeigt eine Kontaktfeder mit einem Federträger 21, an dessen beiden Enden zylindrische Kontaktstücke 22 mit dem Federträger 21 verbunden sind. Zur besseren Positionierung der Kontaktstücke 22 sind zwei Prägungen mit Verbindungsflächen 23 im Federträger 21 vorgesehen. Die Verbindungflächen 23 können wie die Verbindungsflächen 13 nach Figur 2 geprägt sein. In der Mitte des Federträgers 21 ist eine weitere Prägung 24 vorgesehen, die als Kontaktbereich und Befestigungsbereich verwendbar ist.

An den Kanten der Prägung 24 kann die Kontaktfeder geknickt werden, um eine V-förmige Kontaktfeder zu erzeugen. An beiden Kanten der Prägung 24 ist der Federträger 21 um 45° gegen die Prägung 24 knickbar, so dass die beiden Arme des Federträgers 21 einen Winkel von circa 90° einschließen. Selbstverständlich können auch andere Knickwinkel erzeugt werden, um V-förmige Kontaktfedern mit anderen Winkeln zu erzeugen. Zwischen den Armen des geknickten Federträgers 21 kann ein Schleifring (nicht gezeigt) angeordnet sein, der mit beiden Kontaktstücken 22 verbunden ist. Dazu wird der Schleifring zwischen die Kontaktstücke 22 geklemmt, so dass die beiden Arme des Federträgers 21 mit ihrer Federkraft die Kontaktstücke 22 auf den Schleifring drücken und so eine leitende Verbindung von der Prägung 24 des Federträgers 21 über die Kontaktstücke 22 auf den Schleifring entsteht. Um eine dauerhaft leitende Oberfläche zu erhalten, sind die Kontaktstücke 22 zumindest an ihrer Oberfläche aus einem Edelmetall oder eine Edelmetalllegierung gefertigt.

Bei dem Einbau des Federträgers 21 wird die flächige Prägung 24 an eine Fläche an der Einbausituation angelegt, so dass eine gegen eine Verdrehung des Federträgers 21 stabile Befestigung erzielt wird. Eine Verdrehung muss verhindert werden, da die Kontaktstücke 22 nur auf einer Seite des Drahts des Federträgers 21 angeordnet sind. Durch die Prägung 24 wird zudem erreicht, dass Sollbiegestellen am Federträger 21 für die Ausbildung der V-Form vorgegeben sind. Dadurch wird erreicht, dass die Kontaktstücke 22 in der V-Form positionsgenau gegenüberliegen.

Figur 4 zeigt schematisch eine alternative Ausgestaltung eines Federkontakts mit einem langegestreckten, zylindrischen Federträger 31 mit zwei Kontaktstücken 32, die an den beiden Enden des Federträgers 31 angeordnet sind. Die zylindrischen Kontaktstücke 32 sind in zwei Prägungen mit Verbindungsflächen 33 in dem Federträger 31 positioniert. Zwischen den beiden Kontaktstücken 32 sind zwei Kerben 35 vorgesehen. Diese Kerben 35 stellen Schwachstellen dar, an denen der Federträger 31 gebogen werden kann. Dadurch kann der Federkontakt nur in den vorgegebenen, gewünschten Richtungen V-förmig geformt werden.

Alle gezeigten Federkontakte können anstatt aus Drähten mit kreisförmigem Querschnitt auch aus tordierten Blattfedern als Federträger (1, 11, 21, 31) aufgebaut werden. Eine tordierte Blattfeder kann aus einem Blechstück mit langgestreckter, platter Form gebildet werden. Dazu wird das Blechstück um mindestens 180° entlang der Symmetrieachse der langgestreckten Seite des rechteckigen verdreht, also tordiert, so dass die Blattfeder eine Spirale bildet. Die so gebildete Spirale lässt sich in alle Richtungen biegen und weist eine weitgehend symmetrische Steifigkeit in Bezug auf die Ebene senkrecht zur Torsionsachse auf.

Der symmetrische Aufbau der Federträgers (1, 11, 21, 31) durch eine tordierte Blattfeder oder durch einen zylindrischen Draht bewirkt eine symmetrische bereichsweise Steifigkeit des Federträgers (1, 11, 21, 31). Dadurch wird zum Einen die notwendige Federkraft zum Herstellen des Schleifkontakts erzeugt und zum Anderen durch die Beweglichkeit senkrecht zu dieser Federkraft eine Toleranz beim Einbau des Federkontakts erzielt. Die erfindungsgemäßen Federkontakte sind also leichter einzubauen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1, 11, 21, 31: Federträger
- 2, 12, 22, 32: Kontaktstück
- 13, 23, 33: Verbindungsfläche
- 24: Prägung
- 35: Kerbe

## Patentansprüche

1. Federkontakt für einen Schleifkontakt mit einem Anschlussbereich und zumindest einem Kontaktbereich umfassend ein gestrecktes Federelement und ein Edelmetall, wobei der Federkontakt einen leitenden Federträger (21, 31) und zumindest ein Kontaktstück (22, 32) umfasst, wobei der Federträger (21, 31) eine im wesentlichen symmetrische bereichsweise Steifigkeit in einer Ebene senkrecht zur gestreckten Ausdehnung des Federträgers (21, 31) aufweist und aus einem leitenden, im wesentlichen edelmetallfreien Material gefertigt ist und wobei das zumindest eine Kontaktstück (22, 32) mit dem Federträger (21, 31) leitend verbunden ist, zumindest eine Oberfläche zum Bilden des Schleifkontakts umfasst und das Material der Oberfläche des Kontaktstücks (22, 32) ein Edelmetall oder eine Edelmetalllegierung umfasst, wobei zumindest zwei Kontaktstücke (22, 32) an zwei Enden eines V-förmigen Federträgers (21, 31) vorgesehen sind, **dadurch gekennzeichnet, dass**
der Anschlussbereich in der Mitte des Federträgers (21, 31) angeordnet ist, wobei im Bereich des Knicks oder der Knicke des V-förmigen Federträgers (21, 31) eine flache Prägung (24) und/oder zumindest eine Kerben-förmige Prägung (35) zum Biegen der V-Form vorgesehen ist.

2. Federkontakt nach Anspruch 1, **dadurch gekennzeichnet, dass** zumindest ein Kontaktstück (22, 32) zylindrisch, kugelig, U-förmig, profiliert mit Schweißwarzen oder halbkugelförmig ist.

3. Federkontakt nach einem der vorangehenden Ansprüche, **dadurch gekennzeichnet, dass** zumindest ein Kontaktstück (22, 32) aus massivem Edelmetall oder einer Edelmetalllegierung besteht oder ein Manteldraht (2) oder eine Mantelkugel (12) mit einem edelmetallhaltigen Mantel ist.

4. Federkontakt nach einem der vorangehenden Ansprüche, **dadurch gekennzeichnet, dass** der Federträger (21, 31) in der Verbindung (23, 33) zum Kontaktstück (22, 32) flach, kuhlenförmig oder profiliert ist oder der Federträger (11, 21, 31) in zumindest einer Verbindung (23, 33) zu den Kontaktstücken (22, 32) flach, kuhlenförmig und/oder profiliert ist.

5. Federkontakt nach einem der vorangehenden Ansprüche, **dadurch gekennzeichnet, dass** im Bereich des Knicks (25) oder der Knicke (25) des V-förmigen Federträgers (21, 31) mittig zu zwei Kontaktstücken (22, 32) die flache Prägung (24) und/oder zumindest die Kerben-förmige Prägung (35) zum Biegen der V-Form vorgesehen ist.

6. Federkontakt nach einem der vorangehenden Ansprüche, **dadurch gekennzeichnet, dass** der Federträger (21, 31) ein im Querschnitt runder Federdraht mit zumindest bereichsweise symmetrischer Steifigkeit in der Querschnittebene ist.

7. Federkontakt nach einem der Ansprüche 1 bis 6, **dadurch gekennzeichnet, dass** der Federträger (21, 31) eine tordierte Blattfeder ist, die in der Ebene senkrecht zur Torsionsachse eine symmetrische Steifigkeit bezogen auf zumindest einen Bereich der tordierten Blattfeder hat.

8. Federkontakt nach einem der vorangehenden Ansprüche, **dadurch gekennzeichnet, dass** der Federträger (21, 31) und/oder das Kontaktstück (2, 12, 22, 32) oder die Kontaktstücke (22, 32) Drahtstücke mit bis zu 2 mm Durchmesser ist oder sind, bevorzugt 0,1 mm bis 1 mm Durchmesser, besonders bevorzugt 0,5 mm.

9. Schleifringübertrager umfassend einen Federkontakt nach einem der vorangehenden Ansprüche, **dadurch gekennzeichnet, dass** das Kontaktstück (22, 32) oder die Kontaktstücke (22, 32) mit der Oberfläche leitend an zumindest einem Schleifring anliegt oder anliegen.

10. Elektromotor mit einem Schleifringübertrager nach Anspruch 9.

11. Dynamo mit einem Schleifringübertrager nach Anspruch 9.

## Claims

1. Spring-mounted contact for a sliding contact having a connecting region and at least one contacting region, comprising an elongated spring element and a noble metal, whereby the spring-mounted contact comprises a conductive spring support (21, 31) and at least one contact part (22, 32), whereby the spring support (21, 31) possesses essentially symmetrical stiffness, over regions thereof, in a plane perpendicular to the elongated extension of the spring support (21, 31) and is made from a conductive, essentially nobe metal-free material and whereby the at least one contact part (22, 32) is connected in conductive manner to the spring support (21, 31), comprises at least one surface for forming the sliding contact, and the material of the surface of the contact part (22, 32) comprises a noble metal or a noble metal alloy, whereby at least two of the contact parts (22, 32) are provided on two ends of a V-shaped spring support (21, 31),
**characterised in that** the connecting region is arranged in the middle of the spring support (21, 31), whereby a flat embossing (24) and/or at least one groove-shaped embossing (35) for bending the V-shape is provided in the region of the kink or kinks of the V-shaped spring support (21, 31).

2. Spring-mounted contact according to claim 1,
**characterised in that** at least one contact part (22, 32) is cylindrical, spherical, U-shaped, profiled with welding dimples or semi-spherical.

3. Spring-mounted contact according to any one of the preceding claims, **characterised in that** at least one contact part (22, 32) consists of solid noble metal or a noble metal alloy or a wrapped wire (2) or a wrapped sphere (12) possessing a noble metal-containing wrapping.

4. Spring-mounted contact according to any one of the preceding claims, **characterised in that** the spring support (21, 31) is flat, trough-shaped or profiled in the connection (23, 33) to the contact part (22, 32) or the spring support (11, 21, 31) is flat, trough-shaped or profiled in at least one connection (23, 33) to the contact parts (22, 32).

5. Spring-mounted contact according to any one of the preceding claims, **characterised in that** the flat embossing (24) and/or at least the groove-shaped embossing (35) is intended for bending the V-shape in the region of the kink (25) or kinks (25) of the V-shaped spring support (21, 31) in the middle of two contact parts (22, 32).

6. Spring-mounted contact according to any one of the preceding claims, **characterised in that** the spring support (21, 31) is a spring wire with a round cross-section possessing, at least over regions thereof, essentially symmetrical stiffness in the cross-sectional plane.

7. Spring-mounted contact according to any one of the claims 1 to 6, **characterised in that** the spring support (21, 31) is a twisted leaf spring that possesses, in the plane perpendicular to the torsional axis, symmetrical stiffness with respect to at least a region of the twisted leaf spring.

8. Spring-mounted contact according to any one of the preceding claims, **characterised in that** the spring support (21, 31) and/or the contact part (2, 12, 22, 32) or the contact parts (22, 32) is or are pieces of wire with a diameter of up to 2 mm, preferably a diameter of 0.1 mm to 1 mm, particularly preferably 0.5 mm.

9. Slipring joint comprising a spring-mounted contact according to any one of the preceding claims,
**characterised in that** the contact part (22, 32) or the contact parts (22, 32) touch(es), by its surface or their surfaces, against at least one slipring in conductive manner.

10. Electrical motor having a slipring joint according to claim 9.

11. Dynamo having a slipring joint according to claim 9.

## Revendications

1. Contact élastique pour un contact à frottement, avec une zone de connexion et au moins un élément élastique étiré comprenant une zone de contact et un métal noble, sachant que le contact élastique comprend un support élastique conducteur (21, 31) et au moins un élément de contact (22, 32), sachant que le support élastique (21, 31) présente une rigidité essentiellement symétrique par zones dans un plan perpendiculaire par rapport à l'extension étirée du support élastique (21, 31) et est fabriqué dans un matériau conducteur essentiellement dépourvu de métaux nobles, et sachant que l'au moins un élément de contact (22, 32) est relié de manière conductrice au support élastique (21,31), comprend au moins une surface pour former le contact par frottement et le matériau de la surface de l'élément de contact (22, 32) comprend un métal noble ou un alliage de métaux nobles, sachant qu'au moins deux éléments de contact (22, 32) sont prévus sur deux extrémités d'un support élastique (21, 31) en V,
**caractérisé en ce que** la zone de connexion est placée au centre du support élastique (21, 31), sachant qu'au niveau de la courbure ou des courbures du support élastique (21, 31) en V, une gravure plate (24) et/ou au moins une gravure en encoche (35) est prévue pour plier la forme en V.

2. Contact élastique selon la revendication 1,
**caractérisé en ce qu'**au moins un élément de contact (22, 32) est cylindrique, sphérique, en U, profilé avec des perles de soudure ou demi-sphérique.

3. Contact élastique selon la revendication 1 ou 2,
**caractérisé en ce qu'**au moins un élément de contact (22, 32) est en métal noble massif ou en alliage de métaux nobles, ou un fil sous gaine (2) ou une bille sous gaine (12) avec une gaine contenant un métal noble.

4. Contact élastique selon l'une des revendications précédentes,
**caractérisé en ce que** le support élastique (21, 31) dans la connexion (23, 33) avec la pièce de contact (22, 32) est plat, creux ou profilé, ou bien le support élastique (21, 31) est plat, creux et/ou profilé dans au moins une connexion (23, 33) avec les éléments de contact (22, 32).

5. Contact élastique selon l'une des revendications précédentes,
**caractérisé en ce que** la gravure plate (24) et/ou au moins la gravure en encoche (35) pour plier la forme en V est prévue de façon centrale au centre des deux éléments de contact (22, 32) au niveau de la courbure (25) ou des courbures (25) du support élastique (21, 31) en V.

6. Contact élastique selon l'une des revendications précédentes,
**caractérisé en ce que** le support élastique (21, 31) est un fil élastique de section ronde ayant une rigidité symétrique au moins par zones dans le plan transversal.

7. Contact élastique selon l'une des revendications 1 à 6,
**caractérisé en ce que** le support élastique (21, 31) est un ressort à lames torsadé qui a une rigidité symétrique dans le plan vertical à l'axe de torsion par rapport à au moins une partie du ressort à lames torsadé.

8. Contact élastique selon l'une des revendications précédentes,
**caractérisé en ce que** le support élastique (21, 31) et/ou l'élément de contact (2, 12, 22, 32) ou les éléments de contact (22, 32) est/sont un/des morceau(x) de fil d'un diamètre allant jusqu'à 2 mm, de préférence de 0,1 mm à 1 mm, particulièrement de préférence de 0,5 mm.

9. Transmetteur à bague collectrice comprenant un contact élastique selon l'une des revendications précédentes,
**caractérisé en ce que** l'élément de contact (22, 32) ou les éléments de contact (22, 32) sont en contact conducteur par leur surface avec au moins une bague collectrice.

10. Moteur électrique comprenant un transmetteur à bague collectrice selon la revendication 9.

11. Dynamo comprenant un transmetteur à bague collectrice selon la revendication 9.
